# DEMANDE DE BREVET EUROPEEN

(11) **EP 4 199 389 A1**
(43) Date de publication de la demande: **21.06.2023**
(21) Numéro de dépôt: 22214851.2
(22) Date de dépôt: 20.12.2022
(51) Int. Cl.: H04K 3/00

(54) **PROCÉDÉ DE DÉTECTION DE LEURRAGE D'UN SYSTÈME D'ALERTE DE TRAFIC ET D'ÉVITEMENT DE COLLISION ET SYSTÈME D'ALERTE DE TRAFIC ET D'ÉVITEMENT DE COLLISION ASSOCIÉ**

(30) Priorité: 20.12.2021 FR 2113974
(71) Demandeur: THALES, 92400 Courbevoie (FR)
(72) Inventeur: LEDIEU, Kevyn, 33700 MERIGNAC (FR); RICAUD, Denis, 33700 MERIGNAC (FR); FEYT, Nathalie, Véronique, 33700 MERIGNAC (FR)
(74) Mandataire: Lavoix

(57) **Abrégé**

La présente invention concerne un procédé de détection de leurrage d'un système d'alerte de trafic et d'évitement de collision (12), dit système TCAS (12) ;
le système TCAS (12) étant pourvu d'un mode A, d'un mode C et d'un mode S de communication avec des aéronefs environnants ;
le procédé comprenant les étapes suivantes :
- interrogation d'un aéronef suspect de leurrage via le mode S du système TCAS (12) et réception d'une réponse à cette interrogation ;
- déduction de ladite réponse d'au moins certaines données, dites données mode S, relatives à l'aéronef suspect de leurrage ;
- validation des données mode S par interrogation de l'aéronef suspect de leurrage via le mode A ou le mode C du système TCAS (12).

## Description

La présente invention concerne un procédé de détection de leurrage d'un système d'alerte de trafic et d'évitement de collision.

La présente invention concerne également un système d'alerte de trafic et d'évitement de collision associé à un tel procédé.

L'invention s'inscrit dans le domaine de la gestion du trafic aérien et plus précisément dans la gestion des risques de collision air-air.

De manière connue en soi, ce risque est premièrement géré par le contrôle aérien. Si cela n'est pas suffisant, le système d'alerte de trafic et d'évitement de collision connu sous le nom de TCAS (de l'anglais « Traffic Collision Avoidance System »), qui se trouve à bord de tout avion commercial, agit en dernier filet de sécurité.

En particulier, un tel système TCAS, embarqué dans un aéronef, est adapté pour interroger le trafic environnant afin d'obtenir les différentes informations nécessaires à son fonctionnement (distance relative, gisement (angle) et altitude relative entre les aéronefs). Pour cela, le systèmes TCAS interroge les transpondeurs environnants à l'aide du mode A/C et du mode S. Cela lui permet de couvrir les différents types de transpondeurs existant.

La distance relative est calculée par le temps d'aller-retour de l'interrogation-réponse avec un temps d'attente avant réponse qui varie en fonction du mode de communication choisi. Le gisement est obtenu à l'aide d'une antenne directionnelle utilisée pour la réception de la réponse. L'altitude est directement fournie dans la réponse.

Lorsqu'un un risque potentiel de collision se présente, le système TCAS générera tout d'abord une alerte de trafic TA (de l'anglais « Traffic Alert ») pour avertir le pilote de ce potentiel risque. Ensuite, si le risque est toujours présent et confirmé, il générera un ordre de résolution RA (de l'anglais « Resolution Advisory ») qui consiste à demander au pilote de monter, de descendre et/ou de stopper une descente ou une montée. Si les deux aéronefs sont équipés d'un système TCAS, leurs manoeuvres seront coordonnées.

Le système TCAS a été pensé et développé uniquement en terme de sécurité mais pas en terme de sûreté. Le risque principal d'intrusion et de leurrage passe par les échanges en radiofréquence.

Par exemple, il est possible pour un attaquant de simuler les réponses d'un transpondeur grâce notamment à une radio logicielle. Le système TCAS interprétera ces réponses comme un aéronef du trafic environnant pouvant mener à une alerte de trafic et même à un ordre de résolution. Cette manoeuvre représente alors un danger pour le trafic environnant et l'aéronef lui-même.

Actuellement, il n'existe pas de solution pour la détection du leurrage du système TCAS. Cependant, il existe des limitations physiques contraignant le leurrage qui découlent directement du design du système TCAS. Ces limitations ne sont toutefois pas suffisantes car il reste une marge de manoeuvre en-dessous de celles-ci.

Parmi les documents de l'état de la technique, on connait le document EP 3379295 B1 qui propose de détecter de faux signaux ADS-B (de l'anglais « Automatic Dépendant Surveillance - Broadcast ») selon l'angle d'arrivée de ces signaux. Si un faux signal est détecté, le système diffusera dans un message de surveillance que l'information est incohérente. Toutefois, les signaux ADS-B sont utilisés par le système uniquement pour la surveillance lointaine et n'intervient pas dans la construction des alertes de trafic et des ordres de résolution.

Le document EP 3113445 A1 propose de rassembler plusieurs sources potentielles de détection d'attaque et également de comparer cela à différents modèles. Toutefois, ce problème ne traite pas explicitement le problème de leurrage du système TCAS.

Le document US 10880070 B1 propose d'utiliser une blockchain pour valider les différents échanges entre les aéronefs, les satellites et les stations sols. Cependant, cette solution implique les différents inconvénients de la blockchain à bord de l'aéronef (taille en constante croissance de la blockchain, performance pour valider les nouveaux bloques, etc.).

La présente invention a pour but de proposer une solution permettant de détecter un leurrage du système TCAS à bord de l'aéronef embarquant ce système. Cette solution est simple et peu coûteuse à mettre en place.

À cet effet, l'invention concerne un procédé de détection de leurrage d'un système d'alerte de trafic et d'évitement de collision, dit système TCAS.

Le système TCAS est pourvu d'un mode A, d'un mode C et d'un mode S de communication avec des aéronefs environnants.

Le procédé comprend les étapes suivantes :
- interrogation d'un aéronef suspect de leurrage via le mode S du système TCAS et réception d'une réponse à cette interrogation ;
- déduction de ladite réponse d'au moins certaines données, dites données mode S, relatives à l'aéronef suspect de leurrage ;
- validation des données mode S par interrogation de l'aéronef suspect de leurrage via le mode A ou le mode C du système TCAS.

Suivant d'autres aspects avantageux de l'invention, le procédé comprend une ou plusieurs des caractéristiques suivantes, prise(s) isolément ou suivant toutes les combinaisons techniquement possibles :
- l'étape de validation est réitérée N fois, l'aéronef suspect de leurrage étant reconnu comme aéronef un faux trafic lorsque les données mode S ne sont validées par aucune itération ;
- N est supérieur ou égal à 3 ;
- au moins une itération de l'étape de validation est mise en oeuvre lorsque l'aéronef suspect de leurrage devient une menace à la fois en altitude et en distance ;
- au moins une itération de l'étape de validation est mise en oeuvre avant le déclenchement d'une alerte de trafic en relation avec l'aéronef suspect de leurrage ;
- au moins une itération de l'étape de validation est mise en oeuvre avant le déclenchement d'un ordre de résolution en relation avec l'aéronef suspect de leurrage ;
- le procédé comprend en outre une étape de récupération d'un code transpondeur de l'aéronef suspect de leurrage via le mode S ;
- l'étape de récupération du code transpondeur est mise en oeuvre :
   - en mode passif lorsque l'aéronef suspect de leurrage n'est pas une menace en altitude ou en distance ;
   - en mode d'interrogation lorsque l'aéronef suspect de leurrage est une menace en altitude ou en distance ;
- ladite étape de validation des données mode S comprend :
   - interrogation via le mode A ;
   - identification d'une réponse à cette interrogation de l'aéronef suspect de leurrage par comparaison du code transpondeur reçu avec celui récupéré lors de l'étape de récupération ;
   - désignation des données mode S comme validées lorsque la réponse de l'aéronef suspect de leurrage a été reçue dans une fenêtre temporelle déterminée par ces données mode S ;
   - de préférence les données mode S comprennent une distance relative avec l'aéronef suspect de leurrage ;
- ladite étape de validation des données mode S comprend :
   - interrogation via le mode C ;
   - désignation des données mode S comme validées lorsqu'il existe une réponse à cette interrogation avec des données portées/déductibles correspondant aux données mode S ;
      de préférence les données mode S comprennent une distance relative, un gisement et une altitude de l'avion suspect de leurrage,
- le procédé comprend en outre une étape d'analyse comportementale consistant à analyser le comportement de l'aéronef suspect de leurrage au niveau des capacités physiques d'un aéronef et/ou d'une réglementation ;
- l'analyse comportementale comprend l'analyse d'au moins l'un des éléments suivants :
   - vitesse de l'aéronef suspect de leurrage ;
   - variation de la vitesse de l'aéronef suspect de leurrage ;
   - détection d'un émetteur fixe.
- le procédé comprend une étape d'affichage dans le système TCAS d'un symbole représentatif de l'aéronef suspect de leurrage en cas de non-validation des données mode S, ledit symbole étant différent d'un symbole représentatif de tout autre aéronef dont les données mode S ont été validées.

La présente invention a également pour objet un système d'alerte de trafic et d'évitement de collision, dit système TCAS, comprenant des moyens techniques configurés pour mettre en oeuvre le procédé de détection de leurrage tel que précédemment décrit.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système d'alerte de trafic et d'évitement de collision selon l'invention;
- [Fig 2] la figure 2 est un organigramme d'un procédé de détection selon un premier mode de réalisation de l'invention, le procédé étant mis en oeuvre par le système de la figure 1 ;
- [Fig 3] [Fig 4] [Fig 5] les figures 3 à 5 sont différentes vues schématiques illustrant la mise en oeuvre du procédé de la figure 2 ;
- [Fig 6] la figure 6 est un organigramme d'un procédé de détection selon un deuxième mode de réalisation de l'invention, le procédé étant mise en oeuvre par le système de la figure 1 ; et
- [Fig 7] la figure 7 est une vue schématique illustrant la mise en oeuvre du procédé de la figure 6.

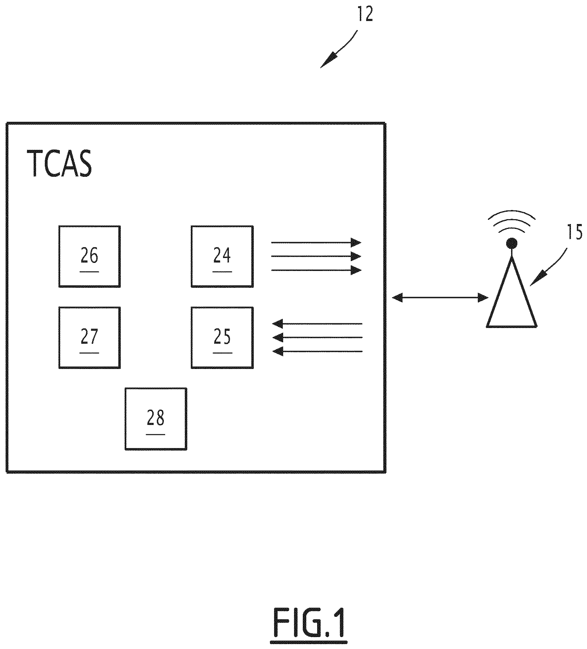

Un système d'alerte de trafic et d'évitement de collision 12, dit système TCAS 12, selon l'invention, est illustré sur la figure 1.

Le système TCAS 12 est embarqué dans un aéronef. Par aéronef, on entend tout engin pilotable à partir de l'intérieur de celui-ci ou alors à distance. Dans le premier cas, un tel aéronef est pilotable par un pilote et peut être représenté par un avion, notamment un avion de ligne, un avion cargo ou alors un avion militaire, ou un hélicoptère. Dans le deuxième cas, un tel aéronef est pilotable par un opérateur à distance et peut être représenté par un drone.

De manière connue en soi, le système TCAS 12 permet d'éviter des collisions avec des aéronefs environnants se trouvant par rapport à l'aéronef embarquant ce système TCAS 12, dans un rayon de longueur prédéterminée. Cette longueur prédéterminée est par exemple inférieure ou égale à 15 NM, avantageusement inférieure ou égale à 10 NM. Parmi les aéronefs environnants, un aéronef présentant une menace de collision est appelé aéronef intrus.

Le système TCAS 12 est raccordé à une antenne 15 apte à transmettre et à recevoir de signaux radioélectriques transportant des données mode S et mode A/C, comme cela sera expliqué par la suite. Cette antenne 15 est également embarquée dans l'aéronef.

Pour communiquer avec les aéronefs environnants via l'antenne 15, le système TCAS 12 comprend un module d'interrogations 24 et un module de réception 25 qui permettent respectivement d'interroger ces aéronefs et de réceptionner des réponses de leur part en utilisant des données mode S et des données mode A/C.

En particulier, pour communiquer avec les aéronefs environnants en utilisant le mode A/C, le module d'interrogations 24 est apte à envoyer vers ces aéronefs, via l'antenne 15, des interrogations selon un mode A ou un mode C connus en soi.

De manière analogue, pour communiquer avec les aéronefs environnants en utilisant le mode S, le module d'interrogations 24 est apte à envoyer vers ces aéronefs, via l'antenne 15, des interrogations selon un mode S connu en soi.

Le module de réception 25 est apte à recevoir, via l'antenne 15, des réponses à l'ensemble des interrogations envoyées par le module d'interrogations 24 et à en déduire des données relatives à l'aéronef ayant répondu à l'interrogation donnée.

En particulier, en mettant en oeuvre une communication selon le mode A, le module d'interrogations 24 permet d'envoyer aux transpondeurs mode A des aéronefs environnants des interrogations de type « Mode-A Only All-Call » et le module de réception 25 permet de recevoir en réponse de ces transpondeurs mode A des messages contenant les codes transpondeur. Chaque code transpondeur présente alors un identifiant du transpondeur ayant répondu à l'interrogation. En outre, chaque transpondeur mode A a un temps fixe pour répondre à l'interrogation. Ce temps est sensiblement égal à 3 microsecondes.

Ainsi, en connaissant ce délai de réponse ainsi que la direction de provenance des signaux de réponse (grâce à une antenne directionnelle par exemple) mode A, le module de réception 25 est apte à déterminer une distance relative avec chaque aéronef environnant ainsi qu'un gisement de cet aéronef.

De manière analogue, en mettant en oeuvre une communication selon le mode C, le module d'interrogations 24 permet d'envoyer aux transpondeurs mode C des aéronefs environnants des interrogations de type « Mode-C Only All-Call » et le module de réception 25 permet de recevoir en réponse de ces transpondeurs mode C des messages contenant des altitudes des aéronefs environnants. Comme dans le mode A, chaque transpondeur mode C a un temps fixe pour répondre à l'interrogation. Ce temps est sensiblement égal à 3 microsecondes.

En connaissant ce délai de réponse ainsi que la direction de provenance des signaux de réponse mode C, le module de réception 25 est apte à déterminer une distance relative avec chaque aéronef environnant ainsi que son gisement. En outre, comme indiqué ci-dessus, l'altitude de chaque aéronef ayant répondu à l'interrogation est contenu dans le message mode C transmis pour le transpondeur mode C correspondant.

En mettant en oeuvre une communication selon le mode S, le module d'interrogations 24 permet d'envoyer aux transpondeurs mode S des aéronefs environnants des interrogations de forme plus complexe et le module de réception 25 permet de recevoir donc davantage d'informations concernant chaque aéronef environnant.

Ainsi, par exemple, lorsque le module d'interrogations 24 envoie l'interrogation de type « Short Air-Air Surveillance », le module de réception 25 reçoit de chaque aéronef environnant un message contenant :
- une adresse OACI (de « Organisation de l'Aviation Civile Internationale ») de l'aéronef environnant ;
- son statut vertical (« Vertical Status ») ;
- sa capacité cross-link (« Cross-link Capability ») ;
- son niveau de sensibilité (« Sensitivity Level ») ;
- son altitude ;
- une information de réponse (« Reply Information »).

Le module d'interrogations 24 est adapté en outre pour envoyer des interrogations de type « Mode-S Only All-Call » et « Long Air-Air Surveillance » et le module de réception 25 est adapté pour recevoir et traiter des réponses à ces interrogations.

Comme dans les cas du transpondeur A/C, chaque transpondeur mode S a un temps fixe pour répondre à chaque interrogation. Ce temps est sensiblement égal à 128 microsecondes.

Également comme dans les cas précédents, en connaissant ce délai de réponse ainsi que la direction de provenance des signaux de réponse mode S, le module de réception 25 est apte à déterminer une distance relative avec chaque aéronef environnant ainsi que son gisement.

Un attaquant éventuel pourrait fausser la position d'un aéronef par rapport à l'aéronef embarquant le système TCAS 12, en répondant aux interrogations de celui-ci envoyées via le mode S selon un temps de réponse autre que celui mentionné ci-dessus. En particulier, un attaquant pourrait répondre à une telle interrogation après un intervalle de temps plus court ce qui aurait comme conséquence la détermination de la distance relative plus courte qu'en réalité.

Le système TCAS 12 selon l'invention permet de prévenir un tel cas et notamment de détecter un leurrage provenant d'un aéronef ou de toute autre station radio qui a pour but de fausser la distance relative jusqu'à cet aéronef ou cette station. Lorsqu'un tel leurrage est détecté, l'aéronef intrus dont la position est faussée est alors considéré comme un faux trafic.

Pour ce faire, le système TCAS 12 selon l'invention comprend en outre un module d'analyse comportementale 26 et un module de validation 27.

Le module d'analyse comportementale 26 est configuré pour déterminer un leurrage en analysant la vitesse et/ou les positions successives d'un aéronef suspect de leurrage. Ces données relatives à l'aéronef suspect de leurrage peuvent par exemple être récupérées à l'aide des interrogations envoyées classiquement par le système TCAS 12.

Le module de validation 27 permet de détecter un leurrage en validant ou non au moins certaines des données déduites des réponses reçues via le mode S par interrogation de l'aéronef suspect de leurrage via le mode A ou le mode C.

En outre, pour assurer la validation par le module de validation 27, les modules d'interrogations 24 et de réception 25 du système TCAS selon l'invention permettent d'envoyer des interrogations spécifiques et de recevoir des réponses à celles-ci via les modes A, C ou S. Ces interrogations sont non-programmées dans les systèmes TCAS actuels et sont envoyées conformément au procédé de détection décrit en détail ci-dessous.

En particulier, lorsque le procédé de détection est mis en oeuvre selon un premier mode de réalisation permettant de valider un aéronef intrus via le mode A, le module d'interrogations 24 permet d'envoyer en outre une interrogation de type « Mode-A All-Call » via le mode A. Le module de réception 25 permet de recevoir une réponse à ce type d'interrogation qui comprend un code transpondeur du transpondeur ayant répondu à cette interrogation et qui permet de déterminer également une distance relative par rapport à l'aéronef correspondant et son gisement.

Dans le même mode de réalisation, le module d'interrogations 24 permet d'envoyer en outre une interrogation de type « Surveillance, Identity Request » et/ou « Comme-A, Identity Request » via le mode S. Le module de réception 25 permet de recevoir une réponse à ce type d'interrogation qui comprend un code transpondeur correspondant.

Lorsque le procédé de détection est mis en oeuvre selon un deuxième mode de réalisation permettant de valider un aéronef intrus via le mode C, le module d'interrogations 24 permet d'envoyer en outre une interrogation de type « Mode-C All-Call » via le mode C. Le module de réception 25 permet de recevoir une réponse à ce type d'interrogation qui comprend une altitude de l'aéronef correspondant et qui permet de déterminer également une distance relative par rapport à cet aéronef et son gisement.

Enfin, le système TCAS 12 selon l'invention comprend également un module d'affichage 28 qui permet d'afficher ou d'indiquer de toute autre manière au pilote ou à l'opérateur, un résultat du procédé de détection selon l'invention.

Les modules 24 à 28 correspondent par exemple à de différents modules informatiques programmés au sein du système TCAS 12. Selon un autre mode de réalisation, au moins certains de ces modules présentent au moins partiellement un circuit logique programmable par exemple de type FPGA (de l'anglais « Field Programmable Gate Array »).

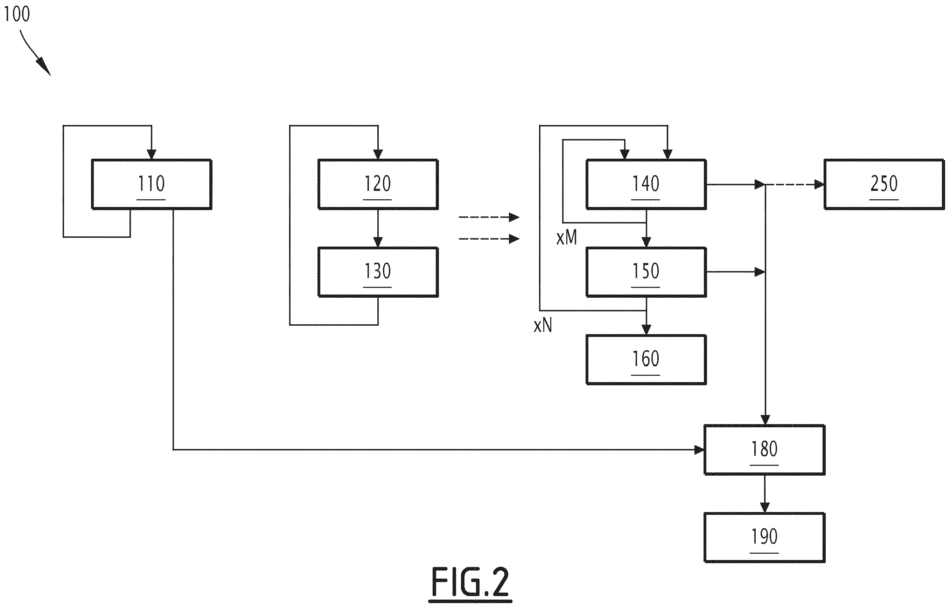

Le procédé de détection 100 selon le premier mode de réalisation sera désormais expliqué en référence à la figure 2 présentant un organigramme de ses étapes.

En particulier, en référence à cette figure, le procédé de détection 100 comprend une étape 110 d'analyse comportementale consistant à analyser le comportement d'un aéronef suspect de leurrage pour détecter un leurrage ou alors valider un aéronef intrus.

Cette étape 110 est mise en oeuvre par le module d'analyse comportementale 26 indépendamment des étapes 120 à 160 du procédé 100. Elle peut par exemple être mise en oeuvre en parallèle avec ces étapes 120 à 160, avant ces étapes ou bien après ces étapes.

Dans certains cas, le résultat d'analyse effectuée lors de cette étape 110 peut conditionner la mise en oeuvre des étapes 120 à 160 ou bien, le résultat de la mise en oeuvre des étapes 120 à 160 peut conditionner la mise en oeuvre de cette étape 110.

Dans certains autres cas, cette étape 110 est mise en oeuvre en parallèle avec les étapes 120 à 160 du procédé 100 et les résultats de ces mises en oeuvre sont ensuite comparés pour prise d'une décision finale, lors par exemple de l'étape 180 expliquée plus en détail ci-dessous.

Lors de l'étape 110, le module d'analyse comportementale 26 analyse le comportement de l'aéronef suspect de leurrage au niveau des capacités physiques d'un aéronef et/ou d'une réglementation, par exemple d'une réglementation en vigueur.

En particulier, l'analyse comportementale comprend l'analyse d'au moins l'un des éléments suivants :
- vitesse de l'aéronef suspect de leurrage ;
- variation de la vitesse de l'aéronef suspect de leurrage ;
- détection d'un émetteur fixe.

Lorsque l'analyse comportementale est basée sur la vitesse de l'aéronef suspect de leurrage, un leurrage peut être détecté lorsque cet aéronef ne respecte pas les limites de vitesse imposées selon la réglementation ou alors présente une vitesse se trouvant en dehors de ses capacités opérationnelles.

Par exemple, la réglementation aérienne limite la vitesse à 250 noeuds en-dessous du niveau de vol FL100. Il est à noter qu'il est interdit de survoler les terres au-delà de la vitesse du son.

| | En-dessous de FL100 | Au-dessus de FL100 |
|---|---|---|
| Au-dessus des terres | 250 noeuds maximum | Vitesse du son qui sera définie selon les conditions réelles (Altitude, pression atmosphérique, température...) |
| Au-dessus des mers et océans | 250 noeuds maximum | Pas de limitation |

Les capacités opérationnelles de l'aéronef peuvent être déterminées de la même manière en fonction par exemple de son type.

Lorsque l'analyse comportementale est basée sur les variations de la vitesse de l'aéronef suspect de leurrage, un leurrage peut être détecté lorsque ces variations sont en dehors d'une plage de variations de vitesses légitime. Cette plage de variations peut par exemple être déterminée par une analyse sur le trafic mondial pendant une certaine période. Cette plage pourra faire l'objet de mise à jour au fur et à mesure de l'évolution du trafic aérien au fil des années.

Un leurrage peut être également détecté lorsque l'aéronef suspect de leurrage est déterminé en tant qu'un émetteur fixe. Pour déterminer un émetteur fixe, il est possible d'analyser les intersections des lignes de distances relatives entre l'aéronef embarquant le système TCAS 12 et l'aéronef suspect de leurrage.

En particulier, si un émetteur est fixe par rapport à la Terre, alors toutes les lignes passant par la position supposée de l'aéronef suspect de leurrage et l'aéronef embarquant le système TCAS 12 se croiseront toujours au même endroit qui est la position de l'émetteur.

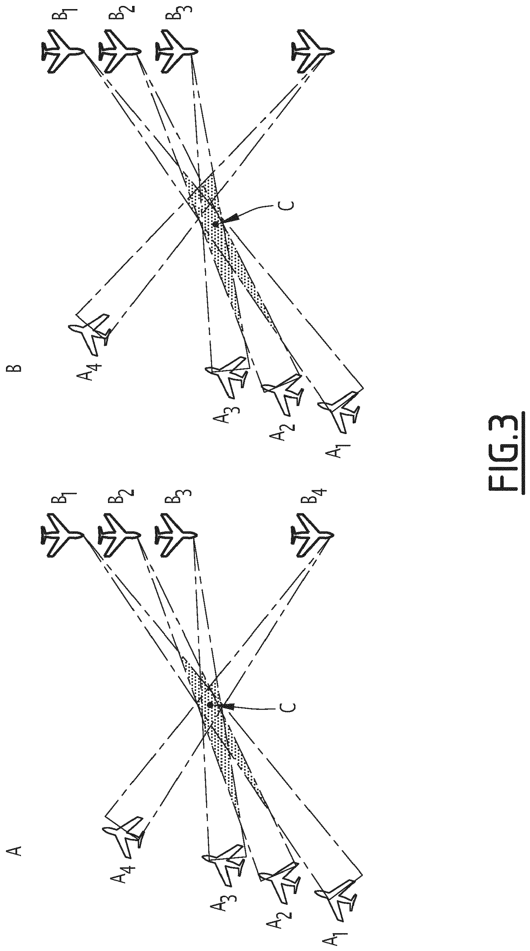

Un tel cas est illustré dans la partie A de la figure 3 sur laquelle A1 à A4 présentent des positions successives supposées de l'aéronef suspect de leurrage et B1 à B4 présentent des positions réelles de l'aéronef embarquant le système TCAS 12. Les cônes de détection déterminés par le système TCAS 12 se croisent tous autour d'une même position C. Cette position C présente donc avec une grande probabilité la position d'un émetteur fixe qui simule les positions A1 à A4.

Au contraire, si un émetteur est en mouvement, les lignes peuvent se croiser également mais pas toujours au même endroit sauf si l'émetteur est aligné dans l'axe longitudinal de l'aéronef.

Un tel cas est illustré sur la partie B de la figure 3 sur laquelle le cône de détection à partir de la position B4 de l'aéronef embarquant le système TCAS 12 s'écarte du point C. Ainsi, dans un tel cas, les positions A1 à A4 peuvent correspondre à des positions réelles de l'aéronef suspect de leurrage.

Bien entendu, l'analyse comportementale peut être basée sur l'analyse basée sur chacun des éléments précités ou uniquement sur certains d'entre eux. D'autres éléments peuvent également être pris en compte pour effectuer l'analyse comportementale.

Les autres étapes du procédé 100 seront désormais expliquées. Comme mentionné ci-dessus, ces étapes sont mises en oeuvre de manière indépendante de l'étape 110.

En outre, il est considéré que chaque aéronef détecté pour la première fois par le système TCAS 12 est considéré en tant qu'un aéronef suspect de leurrage et ne présente pas initialement de menace. Les étapes du procédé ci-dessous sont mises en oeuvre pour chaque aéronef suspect de leurrage.

Les étapes 120 et 130 décrites ci-dessous sont mises en oeuvre de manière cyclique selon une fréquence prédéterminée, afin de surveiller une éventuelle menace de l'aéronef suspect de leurrage.

Lors de l'étape 120, le module d'interrogations 24 interroge l'aéronef suspect de leurrage via le mode S du système TCAS 12. L'interrogation envoyée à l'aéronef suspect de leurrage sont par exemple de type « Short Air-Air Surveillance » ou « Mode-S Only All-Call ».

Puis, le module de réception 25 réceptionne une réponse de l'aéronef suspect de leurrage à cette interrogation.

Lors de l'étape 130, le module de réception 25 déduit de ladite réponse au moins certaines données, dites données mode S, relatives à l'aéronef suspect de leurrage. Avantageusement, ces données mode S comprennent la distance relative avec l'aéronef suspect de leurrage, son gisement et son altitude ainsi que son adresse OACI.

En fonction de ces données, le module de réception 25 détermine également le type de menace, à savoir en altitude et/ou en distance relative que l'aéronef suspect de leurrage peut présenter.

Les étapes suivantes 140 à 160 du procédé sont mises en oeuvre parallèle avec l'étapes 120 et 130 et ont pour but de valider les données mode S obtenues lors des étapes 120 et 130.

Lors de l'étape 140, le module de validation 27 récupère le code transpondeur de l'aéronef suspect de leurrage via le mode S.

Pour ce faire, lorsque l'aéronef suspect de leurrage ne présente aucune menace, le module de validation 27 se trouve dans un mode passif et essaie de lire tout message de type « Surveillance, Identity Request » et/ou « Comme-A, Identity Request » envoyé via le mode S par l'aéronef suspect de leurrage.

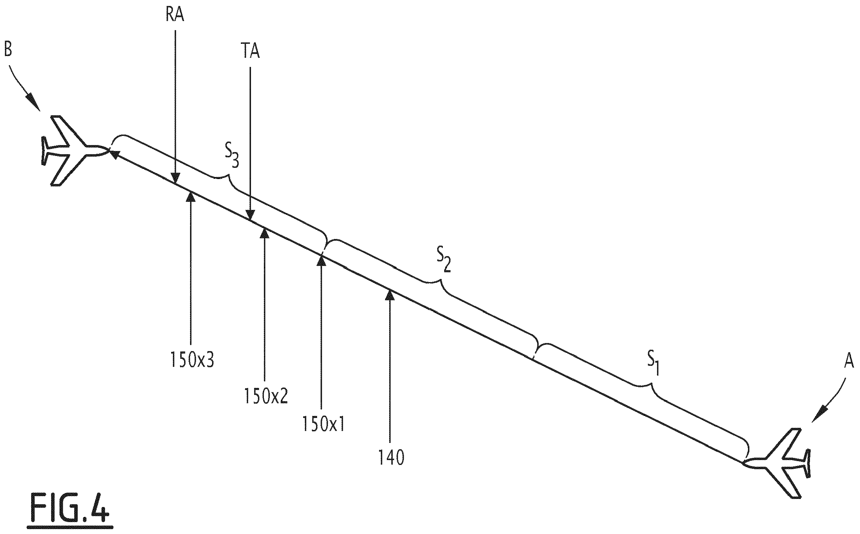

Sur la figure 4, une telle situation correspond au cas lorsque l'aéronef suspect de leurrage A se trouve dans le segment S1 qui est éloigné de l'aéronef B embarquant le système TCAS 12 de plus qu'une distance de sécurité. Cette distance de sécurité est par exemple de 10 NM.

Si le code transpondeur n'a pas pu être récupéré et la distance relative entre les deux aéronefs devient inférieur à la distance de sécurité et l'aéronef suspect de leurrage devient une menace en altitude ou en distance relative, le module de validation 27 passe en mode d'interrogation et commande l'envoi par le module d'interrogations 24 d'une interrogation de type « Surveillance, Identity Request » et/ou « Comme-A, Identity Request » via le mode S.

Sur la figure 4, une telle situation correspond au cas lorsque l'aéronef suspect de leurrage A se trouve dans le segment S2 sur lequel il présente une menace en altitude ou en distance relative.

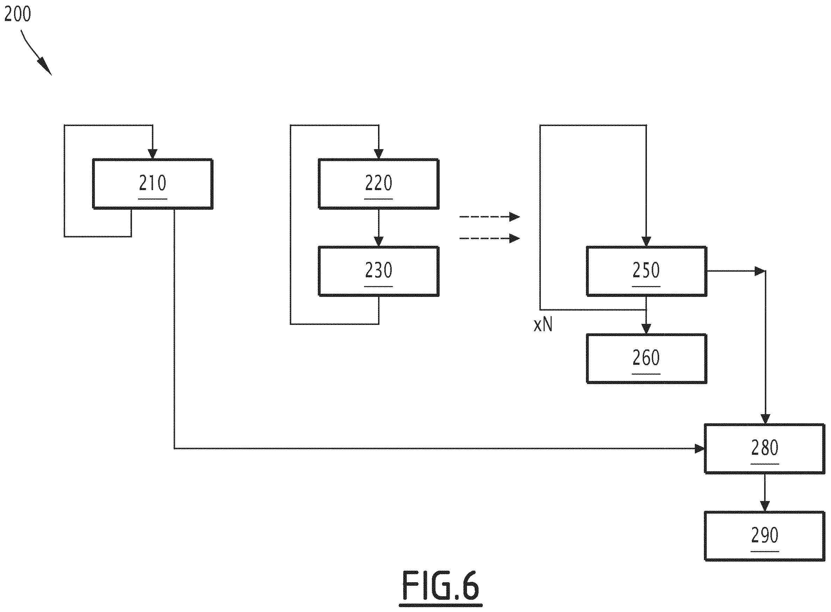

Lorsqu'à l'issue de M tentatives, aucune réponse à cette interrogation de la part de l'aéronef suspect de leurrage n'est reçue, le module de validation 27 passe par exemple à une validation des données mode S par le mode C, comme cela sera expliqué en relation avec le deuxième mode de réalisation. En particulier, dans un tel cas, le module de validation 27 peut passer à l'étape 250 du procédé 200 expliqué en référence à la figure 6. En variante, lorsque M tentatives ont été réalisées sans succès, un leurrage peut donc être détecté et cet aéronef est considéré comme un faux trafic lors de l'étape 180. Le nombre M est par exemple est supérieur ou égal à 3, avantageusement égal à 3.

Dans le cas contraire, le code transpondeur est associée à l'adresse OACI de l'aéronef et fait partie des données mode S correspondant à cette adresse OACI. De plus, l'étape 150 est mise en oeuvre.

Lors de l'étape 150, le module de validation 27 valide ou non les données mode S correspondant à l'aéronef suspect de leurrage par interrogation de cet aéronef via le mode A.

Pour ce faire, le module de validation 27 commande l'envoi par le module d'interrogations 24 d'une interrogation de type « Mode-A All-Call » via le mode A. Le module de réception 25 reçoit une réponse à ce type d'interrogation qui comprend un code transpondeur du transpondeur ayant répondu à cette interrogation.

Grâce au code transpondeur récupéré lors de l'étape 140 précédente, le module de validation 27 identifie parmi l'ensemble des réponses reçues, une réponse à cette interrogation de l'aéronef suspect de leurrage. Cela est fait par comparaison du code transpondeur reçu avec celui récupéré lors de l'étape 140.

Puis, le module de validation 27 désigne les données mode S comme validées lorsque la réponse de l'aéronef suspect de leurrage a été reçue dans une fenêtre temporelle déterminée par ces données mode S et en particulier, par la distance relative correspondant à cet aéronef. Lorsque les données mode S sont validées, lors de l'étape 160, l'aéronef suspect de leurrage est considéré comme un vrai trafic et le système TCAS 12 agit selon son mode de fonctionnement habituel afin d'éviter une collision avec cet aéronef.

Lorsque les données mode S ne sont pas validées ou n'ont pas pu être validées (suite par exemple à l'absence d'une réponse selon le mode A) après N itérations, l'aéronef suspect de leurrage est alors considéré comme un faux trafic lors de l'étape 180. Lors de l'étape 180, ce résultat peut être comparé avec celui de l'étape 110 pour prise d'une décision. Le nombre N est par exemple supérieur ou égal à 3, avantageusement égal à 3.

Avantageusement, selon l'invention, au moins une itération de l'étape 150 est mise en oeuvre lorsque l'aéronef suspect de leurrage devient une menace à la fois en altitude et en distance. Dans l'exemple de la figure 4, un tel cas se produit lorsque l'aéronef suspect de leurrage entre dans le segment S3 sur lequel il présente une menace à la fois en altitude et en distance.

Au moins une autre itération de l'étape 150 est mise en oeuvre avant le déclenchement d'une alerte de trafic TA en relation avec l'aéronef suspect de leurrage et au moins une itération de l'étape 150 est mise en oeuvre avant le déclenchement d'un ordre de résolution RA en relation avec l'aéronef suspect de leurrage. Ces deux cas sont également illustrés sur la figure 4.

Lorsqu'un faux trafic est détecté, i.e. l'étape 180 est mise en oeuvre, le procédé 100 comprend également une étape 190 d'affichage dans le système TCAS 12 d'un symbole représentatif du faux trafic. Cette étape 190 est mise en oeuvre par le module d'affichage 27.

Avantageusement, selon l'invention, le symbole du faux trafic affiché par le module d'affichage 27 est différent d'un symbole représentatif de tout autre aéronef dont les données mode S ont été validées, c'est-à-dire de tout autre aéronef considéré comme un vrai trafic.

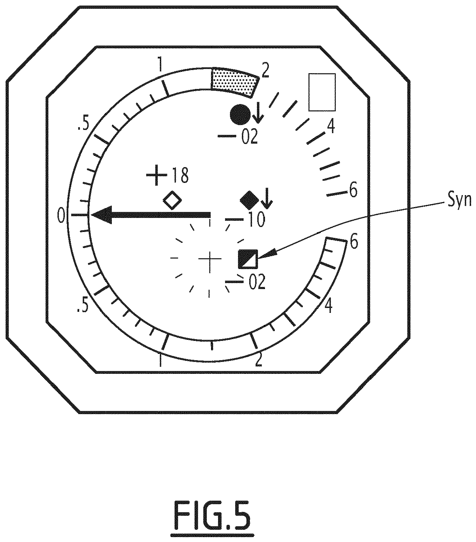

Par exemple, en référence à la figure 5 présentant un exemple d'affichage du système TCAS 12, le symbole Syn représente un faux trafic. Ce symbole a une forme utilisée habituellement pour représenter un vrai trafic (i.e. un carré par exemple) mais définit une caractéristique (telle qu'une couleur) permettant de signaler au pilote ou à l'opérateur qu'il s'agit d'un faux trafic selon le module de validation 27. Dans l'exemple de la figure 5, une moitié du carré est colorée selon une couleur habituelle (rouge par exemple) et l'autre moitié selon une autre couleur. Ainsi, le pilote ou l'opérateur est prévenu qu'il s'agit d'un faux trafic sans perdre de vue celui-ci.

Le procédé de détection 200 selon le deuxième mode de réalisation sera désormais expliqué en référence à la figure 6 présentant un organigramme de ses étapes.

Ce procédé 200 comprend notamment les étapes 210, 220, 230, 260, 280 et 290 qui sont sensiblement analogues aux étapes 110, 120, 130, 160, 180 et 190 expliquées précédemment et ne seront pas expliquées en relation avec ce deuxième mode de réalisation.

À la différence de l'étape 150 expliquée précédemment, l'étape 250 selon le deuxième mode de réalisation comprend la validation des données mode S par interrogation de l'aéronef suspect de leurrage via le mode C du système TCAS 12 et non du mode A.

En outre, selon le deuxième mode de réalisation, il n'est pas nécessaire de récupérer le code transpondeur de sorte que l'étape 140 n'est pas mise en oeuvre.

Pour mettre en oeuvre l'étape 250, le module de validation 27 commande l'envoi par le module d'interrogations 24 d'une interrogation de type « Mode-C All-Call » via le mode C. Le module de réception 25 reçoit des réponses à ce type d'interrogation qui comprennent chacune une altitude de l'aéronef dont le transpondeur a répondu à cette interrogation. Puis, le module de réception 25 associe à chaque réponse reçue une distance relative et un gisement correspondants.

Ensuite, les données mode S relatives à l'aéronef suspect de leurrage sont désignées comme validées par le module de validation 27 lorsqu'il existe une réponse à l'interrogation faite via le mode C qui a sensiblement la même altitude, la même distance relative et le même gisement que les données correspondantes contenues dans les données mode S.

Puis, comme dans le cas précédent, lorsque les données mode S sont validées, lors de l'étape 260, l'aéronef suspect de leurrage est considéré comme un vrai trafic et le système TCAS 12 agit selon son mode de fonctionnement habituel afin d'éviter une collision avec cet aéronef. Dans le cas contraire, l'étape 250 est réitérée N fois avant que les étapes 280 et 290 soient mises en oeuvre.

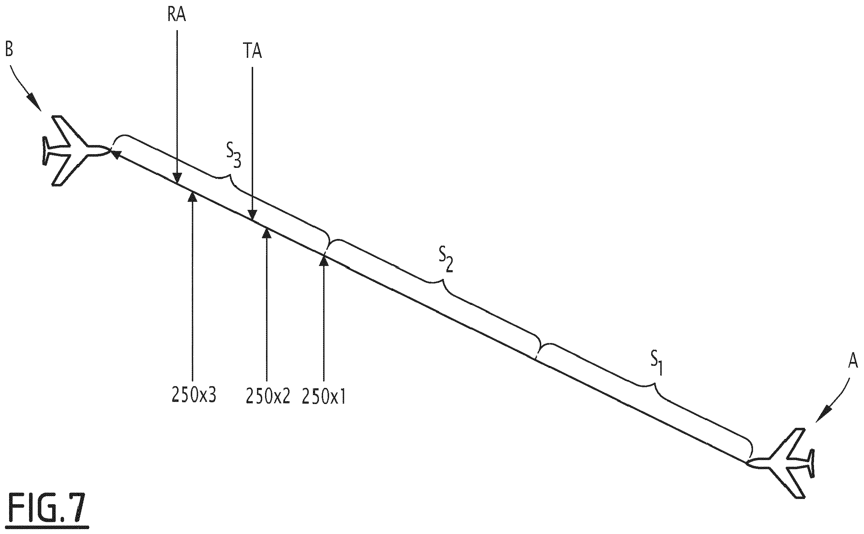

En outre, comme dans le cas précédent, N peut être égal à 3 et chaque itération est mise en oeuvre aux mêmes instants que ceux mentionnés précédemment. Cela est illustré sur la figure 7.

On conçoit alors que selon les deux modes de réalisation, l'invention se repose sur le fait que le temps de réponse aux interrogations selon les modes A ou C est considérablement inférieur à celui selon le mode S. Ainsi, une réponse selon les modes A ou C est pratiquement instantanée et ce temps de réponse ne peut pas être raccourci avec un simulateur d'un émetteur radioélectrique. En revanche, le temps de réponse selon le mode S peut être raccourci par un attaquant potentiel qui peut ainsi fausser sa position. En proposant de valider les données mode S par une interrogation spécifique mode A ou mode C, l'invention permet donc de vérifier si cette spécificité du mode S a été utilisée ou non.

## Revendications

1. Procédé de détection de leurrage (100 ; 200) d'un système d'alerte de trafic et d'évitement de collision (12), dit système TCAS (12) ;
le système TCAS (12) étant pourvu d'un mode A, d'un mode C et d'un mode S de communication avec des aéronefs environnants ;
le procédé (100 ; 200) comprenant les étapes suivantes :
- interrogation (120 ; 220) d'un aéronef suspect de leurrage via le mode S du système TCAS (12) et réception d'une réponse à cette interrogation ;
- déduction (130 ; 230) de ladite réponse d'au moins certaines données, dites données mode S, relatives à l'aéronef suspect de leurrage ;
- validation (150 ; 250) des données mode S par interrogation de l'aéronef suspect de leurrage via le mode A ou le mode C du système TCAS (12).

2. Procédé de détection de leurrage (100 ; 200) selon la revendication 1, dans lequel l'étape de validation (150 ; 250) est réitérée N fois, l'aéronef suspect de leurrage étant reconnu comme un faux trafic lorsque les données mode S ne sont validées par aucune itération.

3. Procédé de détection de leurrage (100 ; 200) selon la revendication 1 ou 2, dans lequel :
- N est supérieur ou égal à 3 ;
- au moins une itération de l'étape de validation (150 ; 250) est mise en oeuvre lorsque l'aéronef suspect de leurrage devient une menace à la fois en altitude et en distance ;
- au moins une itération de l'étape de validation (150 ; 250) est mise en oeuvre avant le déclenchement d'une alerte de trafic (TA) en relation avec l'aéronef suspect de leurrage ;
- au moins une itération de l'étape de validation (150 ; 250) est mise en oeuvre avant le déclenchement d'un ordre de résolution (RA) en relation avec l'aéronef suspect de leurrage.

4. Procédé de détection de leurrage (100) selon l'une quelconque des revendications précédentes, comprenant en outre une étape de récupération (140) d'un code transpondeur de l'aéronef suspect de leurrage via le mode S.

5. Procédé de détection de leurrage (100) selon la revendication 4, dans lequel l'étape de récupération (140) du code transpondeur est mise en oeuvre :
- en mode passif lorsque l'aéronef suspect de leurrage n'est pas une menace en altitude ou en distance ;
- en mode d'interrogation lorsque l'aéronef suspect de leurrage est une menace en altitude ou en distance.

6. Procédé de détection de leurrage (100) selon la revendication 4 ou 5, dans lequel ladite étape de validation (150) des données mode S comprend :
- interrogation via le mode A ;
- identification d'une réponse à cette interrogation de l'aéronef suspect de leurrage par comparaison du code transpondeur reçu avec celui récupéré lors de l'étape de récupération (140) ;
- désignation des données mode S comme validées lorsque la réponse de l'aéronef suspect de leurrage a été reçue dans une fenêtre temporelle déterminée par ces données mode S ;
de préférence les données mode S comprennent une distance relative avec l'aéronef suspect de leurrage.

7. Procédé de détection de leurrage (200) selon l'une quelconque des revendications 1 à 5, dans lequel ladite étape de validation (150) des données mode S comprend :
- interrogation via le mode C ;
- désignation des données mode S comme validées lorsqu'il existe une réponse à cette interrogation avec des données portées/déductibles correspondant aux données mode S ;
de préférence les données mode S comprennent une distance relative, un gisement et une altitude de l'avion suspect de leurrage,

8. Procédé de détection de leurrage (100 ; 200) selon l'une quelconque des revendications précédentes, comprenant en outre une étape d'analyse comportementale (110 ; 210) consistant à analyser le comportement de l'aéronef suspect de leurrage au niveau des capacités physiques d'un aéronef et/ou d'une réglementation.

9. Procédé de détection de leurrage (100 ; 200) selon la revendication 8, dans lequel l'analyse comportementale comprend l'analyse d'au moins l'un des éléments suivants :
- vitesse de l'aéronef suspect de leurrage ;
- variation de la vitesse de l'aéronef suspect de leurrage ;
- détection d'un émetteur fixe.

10. Procédé de détection de leurrage (100 ; 200) selon l'une quelconque des revendications précédentes, comprenant en outre une étape d'affichage (190 ; 290) dans le système TCAS (12) d'un symbole représentatif de l'aéronef suspect de leurrage en cas de non-validation des données mode S, ledit symbole étant différent d'un symbole représentatif de tout autre aéronef dont les données mode S ont été validées.

11. Système d'alerte de trafic et d'évitement de collision (12), dit système TCAS (12), comprenant des moyens techniques (24, ..., 28) configurés pour mettre en oeuvre le procédé de détection de leurrage selon l'une quelconque des revendications précédentes.
